# EUROPEAN PATENT SPECIFICATION

(11) **EP 4 247 081 B1**
(45) Date of publication and mention of the grant of the patent: **03.09.2025**
(21) Application number: 21891850.6
(22) Date of filing: 09.11.2021
(51) Int. Cl.: H04W 72/04, H04L 5/00

(54) **TERMINAL, WIRELESS COMMUNICATION METHOD, AND BASE STATION**
ENDGERÄT, DRAHTLOSKOMMUNIKATIONSVERFAHREN UND BASISSTATION
TERMINAL, PROCÉDÉ DE COMMUNICATION SANS FIL ET STATION DE BASE

(30) Priority: 10.11.2020 JP 2020187529
(43) Date of publication of application: 20.09.2023
(73) Proprietor: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/041135
(87) International publication number: WO 2022/102604

(56) References cited:
- EP-A1- 3 952 158
- WO-A1-2020/220976
- INTEL CORPORATION: "NR PDCCH search spaces: BDs and channel estimation requirements", vol. RAN WG1, no. Sanya, P.R. China; 20180416 - 20180420, 7 April 2018 (2018-04-07), XP051414089, Retrieved from the Internet <URL:http://www.3gpp.org/ftp/tsg%5Fran/WG1%5FRL1/TSGR1%5F92b/Docs/> [retrieved on 20180407]
- LENOVO, MOTOROLA MOBILITY: "Enhancements on Multi-TRP for PDCCH, PUCCH and PUSCH", 3GPP DRAFT; R1-2008911, vol. RAN WG1, 24 October 2020 (2020-10-24), pages 1 - 15, XP051946723
- CATT: "Discussion on enhancements on multi-TRP/panel for PDCCH, PUCCH and PUSCH", 3GPP DRAFT; R1-2007825, vol. RAN WG1, 24 October 2020 (2020-10-24), pages 1 - 15, XP051946506

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Physical downlink control channel (PDCCH) repetition is under study. An example of such repetition can be found in WO 2020/220976 A1 (HUAWEI TECH CO LTD [CN]), 5 November 2020.

However, it is not made clear how to determine PDCCH candidates for a plurality of repetitions under a restriction (the maximum number). If PDCCH candidates are not appropriately determined, throughput may degrade or communication quality may deteriorate.

Thus, an object of the present disclosure is to provide a terminal, a radio communication method, and a base station that allow appropriate determination of PDCCH candidates.

### Solution to Problem

A terminal according to an aspect of the present disclosure includes: a control section that determines a plurality of physical downlink control channel (PDCCH) candidates; and a receiving section that monitors the plurality of PDCCH candidates. The plurality of PDCCH candidates are associated with a plurality of respective values of a parameter indicating at least one of a control resource set, a search space set, a slot, and a span, and the plurality of PDCCH candidates are linked together.

### Advantageous Effects of Invention

According to an aspect of the present disclosure, it is possible to appropriately determine PDCCH candidates.

### Brief Description of Drawings

[FIG. 1] FIG. 1 is a diagram to show an example of the maximum number of monitored PDCCH candidates per slot;
[FIG. 2] FIG. 2 is a diagram to show an example of the maximum number of non-overlapped CCEs per slot;
[FIG. 3] FIG. 3 is a diagram to show an example according to a first embodiment;
[FIG. 4] FIG. 4 is a diagram to show an example according to Aspect 2-1;
[FIG. 5] FIG. 5 is a diagram to show an example according to Aspect 2-2;
[FIG. 6] FIGS. 6A and 6B are each a diagram to show an example according to Aspect 2-3;
[FIG. 7] FIGS. 7A and 7B are each a diagram to show an example according to Aspect 2-4;
[FIG. 8] FIG. 8 is a diagram to show an example according to Aspect 3-1;
[FIG. 9] FIG. 9 is a diagram to show an example according to Aspect 3-2;
[FIG. 10] FIG. 10 is a diagram to show an example of a schematic structure of a radio communication system according to one embodiment;
[FIG. 11] FIG. 11 is a diagram to show an example of a structure of a base station according to one embodiment;
[FIG. 12] FIG. 12 is a diagram to show an example of a structure of a user terminal according to one embodiment; and
[FIG. 13] FIG. 13 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case where the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (i.e., a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or a spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS having a TCI state of QCL type X may mean an RS having a relationship of QCL type X with (a DMRS of) a certain channel/signal, and this RS may be referred to as a QCL source having the TCI state of QCL type X.

For a PDCCH and a PDSCH, a QCL type A RS is configured inevitably, and a QCL type D RS may be configured additionally. Since it is difficult to estimate Doppler shift, delay, and the like, based on one-shot reception of a DMRS, the QCL type A RS is used for improvement of channel estimation accuracy. The QCL type D RS is used for receive beam determination at the time of DMRS reception.

For example, TRSs 1-1, 1-2, 1-3, and 1-4 are transmitted, and the TRS 1-1 is notified as a QCL type C/D RS by using the TCI state of a PDSCH. Through such a notification of the TCI state, the UE can use information obtained through results of past periodic reception/measurement of the TRS 1-1, for reception of / channel estimation for a DMRS for the PDSCH. In this case, the QCL source of the PDSCH is the TRS 1-1, and a QCL target is the DMRS for the PDSCH.

### (Multi-TRP)

For NR, it is studied that one or a plurality of transmission/reception points (TRPs) (multi-TRP (multi TRP (MTRP))) performs DL transmission to a UE by using one or a plurality of panels (multi-panel). It is also studied that a UE performs UL transmission to one or a plurality of TRPs by using one or a plurality of panels.

Note that the plurality of TRPs may correspond to the same cell identifier (ID) or may correspond to different cell IDs. Each cell ID may be a physical cell ID or may be a virtual cell ID.

The multi-TRP (for example, TRPs #1 and #2) may be connected through an ideal/non-ideal backhaul to exchange information, data, and the like. Different codewords (Code Words (CWs)) and different layers may be transmitted from the respective TRPs of the multi-TRP. As one mode of multi-TRP transmission, non-coherent joint transmission (NCJT) may be used.

In NCJT, for example, TRP #1 performs modulation mapping on a first codeword and performs layer mapping to transmit a first number of layers (for example, two layers) a first PDSCH by using first precoding. TRP #2 performs modulation mapping on a second codeword and performs layer mapping to transmit a second number of layers (for example, two layers) a second PDSCH by using second precoding.

Note that the plurality of PDSCHs (multi-PDSCH) transmitted by NJCT may be defined to partially or entirely overlap each other in terms of at least one of the time domain and the frequency domain. In other words, the first PDSCH from the first TRP and the second PDSCH from the second TRP may overlap each other in at least one of the time domain and the frequency domain.

The first PDSCH and the second PDSCH may be assumed not to have a quasi-co-location (QCL) relationship (not quasi-co-located). Reception of multi-PDSCH may be interpreted as simultaneous reception of PDSCHs that are not of a certain QCL type (for example, QCL type D).

A plurality of PDSCHs (which may be referred to as a multi-PDSCH (multiple PDSCHs)) from the multi-TRP may be scheduled by using one piece of DCI (a single piece of DCI, a single PDCCH) (single-master mode, multi-TRP based on a single piece of DCI (single-DCI based multi-TRP)). A plurality of PDSCHs from the multi-TRP may be scheduled by using a plurality of respective pieces of DCI (multi-DCI, multi-PDCCH (multiple PDCCHs)) (multi-master mode, multi-TRP based on multi-DCI (multi-DCI based multi-TRP)).

It is studied to support PDSCH (transport block (TB) or codeword (CW)) repetition using multi-TRP, in URLLC for multi-TRP. It is studied to support schemes of repetition using multi-TRP in the frequency domain, layer (spatial) domain, or time domain (URLLC schemes, for example, schemes 1, 2a, 2b, 3, and 4). In scheme 1, multi-PDSCH from multi-TRP is multiplexed by space division multiplexing (SDM). In schemes 2a and 2b, PDSCHs from multi-TRP are multiplexed by frequency division multiplexing (FDM). In scheme 2a, redundancy versions (RVs) are the same for the multi-TRP. In scheme 2b, RVs may be the same for or different among the multi-TRP. In schemes 3 and 4, multi-PDSCH from multi-TRP is multiplexed by time division multiplexing (TDM). In scheme 3, multi-PDSCH from multi-TRP is transmitted in one slot. In scheme 4, multi-PDSCH from multi-TRP is transmitted in different slots.

According to such a multi-TRP scenario, more flexible transmission control using channels of high quality is possible.

To support intra-cell (having the same cell ID) or inter-cell (having different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of PDCCHs and PDSCHs with a plurality of TRPs.

In a case where at least one of conditions 1 and 2 below is satisfied, the UE may determine that the case uses multi-TRP based on multi-DCI. In this case, each TRP may be interpreted as a CORESET pool index.

### {Condition 1}

One CORESET pool index is configured.

### {Condition 2}

Two different values (for example, 0 and 1) of CORESET pool indices are configured.

In a case where the following condition is satisfied, the UE may determine that the case uses multi-TRP based on a single piece of DCI. In this case, two TRPs may be interpreted as two TCI states indicated by a MAC CE / DCI.

### {Condition}

To indicate one or two TCI states for one codepoint of a TCI field in DCI, an "enhanced TCI states activation/deactivation for UE-specific PDSCH MAC CE" is used.

DCI for common beam indication may be of a UE-specific DCI format (for example, a DL DCI format (for example, 1_1, 1_2)) or a UL DCI format (for example, 0_1, 0_2), or may be a UE-group common DCI format.

### (Multi-TRP PDCCH)

For reliability of a multi-TRP PDCCH based on a non-single frequency network (SFN), the following matters are studied.
- Coding / rate matching is based on one repetition, and the same coding bits are repeated in another repetition.
- Repetitions each include the same number of control channel elements (CCEs) and the same coding bits and correspond to the same DCI payload.
- Two or more PDCCH candidates are explicitly linked to each other. The UE knows the link before decoding.

Options 1-2, 1-3, 2, and 3 below for PDCCH repetition are studied.

### {Option 1-2}

Two sets of PDCCH candidates (in a given search space (SS) set) are associated with two respective TCI states of a CORESET. Here, PDCCH repetition in the same CORESET, the same SS set, and different monitoring occasions is employed.

### {Option 1-3}

Two sets of PDCCH candidates are associated with two respective SS sets. Both of the SS sets are associated with the CORESET, and each of the SS sets is associated only with one of the TCI states of the CORESET. Here, the same CORESET and two SS sets are used.

### {Option 2}

One SS set is associated with two different CORESETs.

### {Option 3}

Two SS sets are associated with two respective CORESETs.

### (PDCCH Candidate Allocation)

In Rel-15 NR, a network (NW) guarantees for a common search space (CSS) that overbooking (excessive allocation) does not occur. The UE does not assume, for monitored PDCCH candidates and non-overlapped control channel elements (CCEs) per slot, that a CCS set to cause a corresponding total number or the corresponding number per scheduled cell to exceed a corresponding maximum number per slot is configured.

In Rel-15 NR, a network (NW) guarantees for a secondary cell (SCell) that overbooking based on a case where carrier aggregation (CA) is not performed (non-CA) does not occur. The UE does not assume for cross carrier scheduling in a case where a scheduling cell and a scheduled cell include a plurality of DL BWPs having the same subcarrier spacing (SCS) configuration µ, or scheduling of the same cell, that the number of PDCCH candidates and the number of non-overlapped CCEs per slot in the SCell does not exceed a corresponding number possible for the UE to monitor in the SCell per slot.

The UE does not assume to monitor a PDCCH in a USS set not including any PDCCH allocated for monitoring.

First, PDCCH candidates for CSS are allocated, and then PDCCH candidates for a UE-specific search space (USS) are allocated in ascending order of search space set indices (IDs) (from the lowest index).

The CSS has a higher priority than that of the USS.

All PDCCH candidates in a USS set having a lower SS set ID are mapped before PDCCH candidates in a USS set having a higher SS set ID. If it is not possible to map all the PDCCH candidates in a certain SS set, the PDCCH candidates in the SS set and subsequent SS sets are dropped (not mapped). An SS set after a certain SS set in the order of SS set IDs may be referred to as a subsequent SS set.

If a higher layer index is configured, for each CORESET, for the UE supporting multi-PDCCH (multi-DCI) based multi-TRP transmission, the UE may support the following principle for the maximum numbers of BDs and CCEs for multi-DCI based multi-TRP transmission.

The maximum number of monitored PDCCH candidates per slot in a certain DL BWP for CORESETs configured for the same TRP (same higher layer index) need not necessarily exceed a limitation M_{PDCCH}^{max,slot,µ} of Rel. 15, and the maximum number of non-overlapped CCEs need not necessarily exceed a limitation C_{PDCCH}^{max,slot,µ} of Rel. 15. The higher layer index may be configured for each piece of PDCCH configuration information (PDCCH-Config) or for each CORESET. A higher layer index may correspond to a TRP.

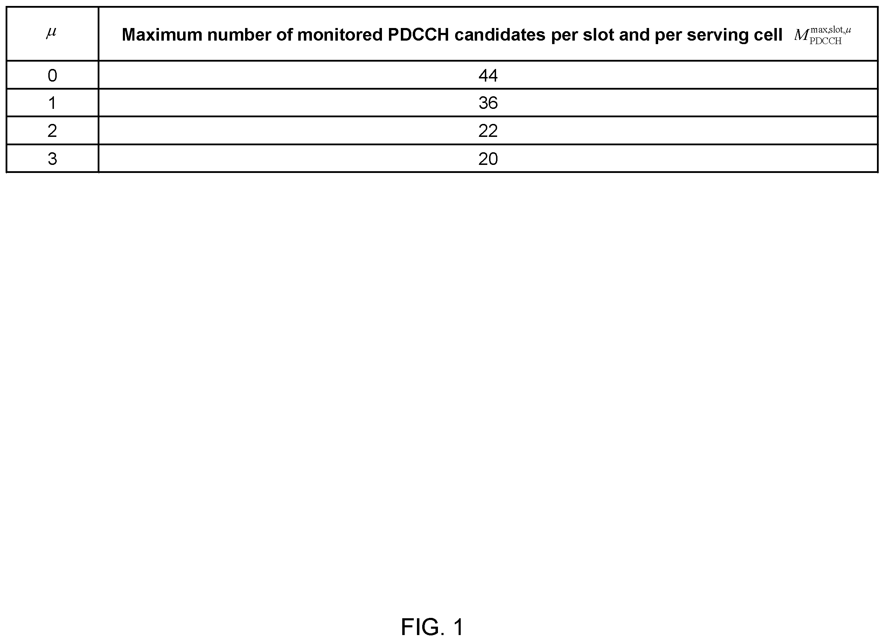

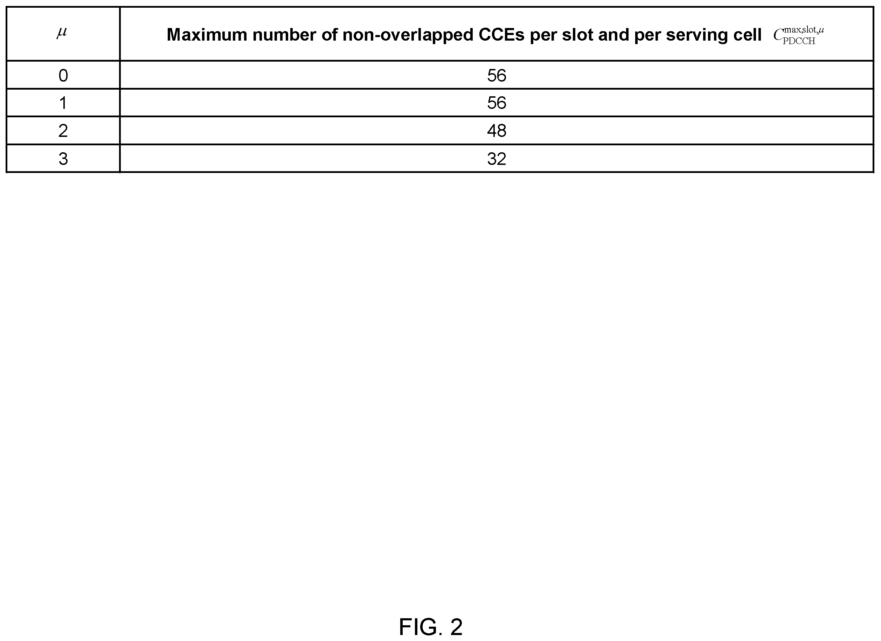

FIG. 1 shows the maximum number M_{PDCCH}^{max,slot,µ} of monitored PDCCH candidates per slot for a DL BWP having an SCS configuration µ ∈ {0, 1, 2, 3} for operation using a single serving cell in Rel. 15. FIG. 2 shows the maximum number C_{PDCCH}^{max,slot,µ} of non-overlapped CCEs per slot for a DL BWP having an SCS configuration µ ∈ {0, 1, 2, 3} for operation using a single serving cell in Rel. 15. When CCEs for PDCCH candidates correspond to different CORESET indices or different initial symbols for receptions of the respective PDCCH candidates, the CCEs do not overlap each other.

If Σ_{µ} = ₀³N_{cells}^{DL,µ} ≤ N_{cells}^{cap} and the UE is configured with N_{cells}^{DL,µ} DL cells each including a DL BWP having an SCS configuration µ, the UE is not required to monitor, for each scheduled cell, PDCCH candidates the number of which is larger than M_{PDCCH}^{total,slot,µ} = M_{PDCCH}^{max,slot,µ} or non-overlapped CCEs the number of which is larger than C_{PDCCH}^{total,slot,µ} = C_{PDCCH}^{max,slot,µ} per slot, in an active DL BWP in a scheduling cell. N_{cells}^{cap} may be a value of capability information (pdcch-BlindDetectionCA) provided by the UE or the number of configured DL cells.

The UE may indicate capability to monitor PDCCHs according to one or more combinations (X, Y). One span may be consecutive symbols for which the UE is configured to monitor PDCCHs in one slot. Each PDCCH monitoring occasion may be within one span. If the UE monitors PDCCHs in one cell according to the combination (X, Y), the UE supports a plurality of PDCCH monitoring occasions in any symbol in one slot having the smallest separation among X symbols between the initial symbols of two consecutive spans across a boundary between a plurality of slots. One span starts from the initial symbol where a certain PDCCH monitoring occasion starts while ending at the last symbol where a certain PDCCH monitoring occasion ends, and the number of symbols of the span is up to Y.

A maximum number M_{PDCCH}^{max,(X, Y),µ} of monitored PDCCH candidates in one span for the combination (X, Y) in a DL BWP having a subcarrier spacing (SCS) configuration µ {0, 1} for a single serving cell may be defined in a specification. A maximum number C_{PDCCH}^{max,(X, Y),µ} of non-overlapped CCEs in one span for the combination (X, Y) in a DL BWP having a subcarrier spacing (SCS) configuration µ {0, 1} for a single serving cell may be defined in a specification.

Two PDCCH candidates (repetition) having linkage (link, liaison) may be decoded by the UE through soft combining. The following assumptions are studied for how to count up to the limitation of BDs/CCEs.

### {Assumption 0}

For the BD limitation, two units are needed for complexity related to RE demapping/demodulation.

### {Assumption 0-1}

For the BD limitation, one or more units are needed for complexity related to decoding. The UE only decodes, without decoding individual PDCCH candidates, combined candidates. The reason of defining "equal to or more than" is because soft combining has additional complexity related to storing. In this case, blockage may affect performance (not separated decoding). In this case, a base station (gNB) is implicitly indicated that it is necessary to always transmit both PDCCH candidates (i.e., the base station cannot choose only one).

### {Assumption 0-2}

For the BD limitation, two units are needed for complexity related to decoding. The UE decodes individual PDCCH candidates. Soft combining is not considered for BDs.

### {Assumption 0-3}

For the BD limitation, two or more units are needed for complexity related to decoding. The UE decodes a first PDCCH candidate and also decodes combined candidates. In this case, if the first PDCCH candidate is blocked (due to PDCCH blocking or due to blockage), this affects second decoding (in addition to the first decoding). Moreover, in this case, the base station (gNB) is implicitly indicated that it is not possible to select to transmit only DCI in the second PDCCH candidate.

### {Assumption 0-4}

For the BD limitation, three units are needed for complexity related to decoding. The UE decodes PDCCH candidates individually and also decodes combined candidates.

When counting is performed up to the BD/CCE limitation in a case of PDCCH repetition using soft combining, linkage between two PDCCH candidates is considered. However, a procedure for PDCCH overbooking (PDCCH candidate allocation) is not made clear.

Thus, the inventors of the present invention came up with the idea of a method of counting/allocating PDCCH candidates.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interpreted interchangeably. In the present disclosure, a cell, a serving cell, a CC, a carrier, a BWP, a DL BWP, a UL BWP, an active DL BWP, an active UL BWP, and a band may be interpreted interchangeably. In the present disclosure, an index, an ID, an indicator, and a resource ID may be interpreted interchangeably. In the present disclosure, support, control, can control, operate, and can operate may be interpreted interchangeably.

In the present disclosure, configure, activate, update, indicate, enable, specify, and select may be interpreted interchangeably.

In the present disclosure, link, associate, correspond, and map may be interpreted interchangeably. In the present disclosure, allocate, assign, monitor, and map may be interpreted interchangeably.

In the present disclosure, for example, the higher layer signaling may be any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interpreted interchangeably.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interpreted interchangeably.

In the present disclosure, a beam, a spatial domain filter, a spatial setting, a TCI state, a UL TCI state, a unified TCI state, a unified beam, a common TCI state, a common beam, a TCI assumption, a QCL assumption, a QCL parameter, a spatial domain receive filter, a UE spatial domain receive filter, a UE receive beam, a DL beam, a DL receive beam, DL precoding, a DL precoder, a DL-RS, an RS having TCI state /QCL assumption of QCL type D, an RS having TCI state / QCL assumption of QCL type A, a spatial relation, a spatial domain transmission filter, a UE spatial domain transmission filter, a UE transmit beam, a UL beam, a UL transmit beam, UL precoding, a UL precoder, and a PL-RS may be interpreted interchangeably. In the present disclosure, a QCL-type-X-RS, a DL-RS associated with QCL type X, a DL-RS having QCL type X, a DL-RS source, an SSB, a CSI-RS, and an SRS may be interpreted interchangeably.

In the present disclosure, a panel, an Uplink (UL) transmission entity, a TRP, a spatial relation, a control resource set (CORESET), a PDSCH, a codeword, a base station, an antenna port of a certain signal (for example, a demodulation reference signal (DMRS) port), an antenna port group of a certain signal (for example, a DMRS port group), a group for multiplexing (for example, a code division multiplexing (CDM) group, a reference signal group, a CORESET group), a CORESET pool, a CORESET subset, a CW, a redundancy version (RV), and a layer (MIMO layer, transmission layer, spatial layer) may be interpreted interchangeably. The panel Identifier (ID) and a panel may be interpreted interchangeably. In the present disclosure, a TRP ID and a TRP may be interpreted interchangeably.

In the present disclosure, a TRP, a transmission point, a panel, a DMRS port group, a CORESET pool, and one of two TCI states associated with one codepoint of a TCI field may be interpreted interchangeably.

In the present disclosure, a single-TRP, a single-TRP system, a single TRP transmission, and a single PDSCH may be interpreted interchangeably. In the present disclosure, a multi-TRP, a multi-TRP system, multi-TRP transmission, and a multi-PDSCH may be interpreted interchangeably. In the present disclosure, a single piece of DCI, a single PDCCH, a multi-TRP based on a single piece of DCI, and two TCI states in at least one TCI codepoint being activated may be interpreted interchangeably.

In the present disclosure, a single TRP, a channel using a single TRP, a channel using one TCI state / spatial relation, a multi-TRP being not enabled by RRC/DCI, a plurality of TCI states / spatial relations being not enabled by RRC/DCI, and one CORESET pool index (CORESETPoolIndex) value being not configured for any CORESET while any codepoint of a TCI field being not mapped to two TCI states may be interpreted interchangeably.

In the present disclosure, a multi-TRP, a channel using a multi-TRP, a channel using a plurality of TCI states / spatial relations, a multi-TRP being enabled by RRC/DCI, a plurality of TCI states / spatial relations being enabled by RRC/DCI, and at least one of a multi-TRP based on a single piece of DCI and a multi-TRP based on multi-DCI may be interpreted interchangeably. In the present disclosure, a multi-TRP based on multi-DCI, and one CORESET pool index (CORESETPoolIndex) value being configured for a CORESET may be interpreted interchangeably. In the present disclosure, a multi-TRP based on a single piece of DCI and at least one codepoint of a TCI field being mapped to two TCI states may be interpreted interchangeably.

In the present disclosure, TRP #1 (first TRP) may correspond to CORESET pool index = 0 or correspond to the first TCI state of two TCI states corresponding to one codepoint of a TCI field. TRP #2 (second TRP) may correspond to CORESET pool index = 1 or correspond to the second TCI state of the two TCI states corresponding to the one codepoint of the TCI field.

In the present disclosure, a DMRS, a DMRS port, and an antenna port may be interpreted interchangeably.

In the present disclosure, the number of monitored PDCCH candidates and the number of blind detections (BDs) may be interpreted interchangeably. The number of non-overlapped CCEs, the number of CCEs for channel estimation, and the number of CCEs may be interpreted interchangeably.

In the present disclosure, a limitation, an upper limit, a limit, a restriction, and the maximum number may be interpreted interchangeably.

In the present disclosure, a slot, a span, consecutive symbols, and a time domain resource may be interpreted interchangeably.

### (Radio Communication Method)

Either of assumptions 1 and 2 below may be assumed in consideration that allocation of PDCCH candidates is performed for each slot/span.

### {Assumption 1}

A plurality of PDCCH candidates for repetition are in the same (one) slot/span.

For assumption 1, either of assumptions 1-1 and 1-2 below is assumed in consideration that the plurality of PDCCH candidates are allocated in a unit of an SS set.

### {{Assumption 1-1}}

The plurality of PDCCH candidates are in the same (one) SS set.

### {{Assumption 1-2}}

The plurality of PDCCH candidates are in different (a plurality of) SS sets.

### {Assumption 2}

A plurality of PDCCH candidates for repetition are in different (a plurality of) slots/spans.

The linkage between two SS sets / PDCCH candidates may be defined in a specification or configured.

### <First Embodiment>

In assumption 1-1 (case where a plurality of PDCCH candidates are in the same (one) slot/span and the plurality of PDCCH candidates are in the same (one) SS set), a procedure for counting up to the maximum number of PDCCH candidates possible for the UE to monitor (procedure for allocating the PDCCH candidates) for one SS set may follow the following.

Two PDCCH candidates having linkage may be counted as 1/2/3/4 (at least one of 1, 2, 3, and 4). A plurality of values among 1/2/3/4 may be supported. This support of the plurality of values may depend on at least one of a configuration and UE capability. For example, according to an existing procedure, the two PDCCH candidates having linkage is counted as 2.

This embodiment may be applied to option 1-2 / option 2 described above.

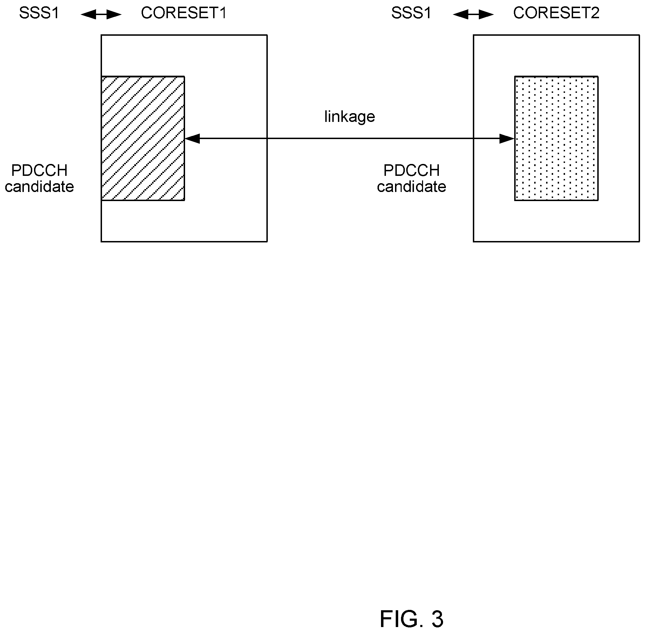

In an example in FIG. 3, CORESETs 1 and 2 are associated with a search space set (SSS1). A PDCCH candidate in CORESET 1 and a PDCCH candidate in CORESET 2 have linkage. These two PDCCH candidates are counted as 1/2/3/4. In accordance with this method, PDCCH candidates possible for the UE to monitor may be counted up to the maximum number for one SS set.

According to this embodiment, a plurality of PDCCH candidates in the same (one) slot/span and in the same (one) SS set can be appropriately counted/allocated.

### <Second Embodiment>

In assumption 1-2 (case where a plurality of PDCCH candidates are in the same (one) slot/span and the plurality of PDCCH candidates are in different (a plurality of) SS sets), a procedure for counting up to the maximum number of PDCCH candidates possible for a UE to monitor for two SS sets having linkage (procedure for allocating the PDCCH candidates) may follow any one of aspects 2-1 to 2-4 below.

### <<Aspect 2-1>>

Two PDCCH candidates in the two SS sets are counted independently and allocated independently (similarly to the existing procedure).

In a case of counting for an SS set having a lower ID, when one PDCCH candidate is linked to another PDCCH candidate, the number of PDCCH candidates may be counted as 1.

In a case of counting for an SS set having a higher ID, when one PDCCH candidate is linked to another PDCCH candidate, the number of PDCCH candidates may be counted as 1. In this case, the number of PDCCH candidates may be counted as 2 or 3 in consideration of additional complexity of soft combining. A plurality of values among 1/2/3/ may be supported. This support of the plurality of values may depend on at least one of a configuration and UE capability.

The PDCCH candidates may be allocated in the order of SS set IDs from the lowest to the highest (ascending order) (similarly to the existing procedure).

If there are not sufficient PDCCH candidates for a certain SS set (no room for PDCCH candidates, not a sufficient remaining number of PDCCH candidates to the maximum number), all the PDCCH candidates in the SS set need not necessarily be allocated (may be dropped) (similarly to the existing procedure).

In this case, it may happen that a first PDCCH candidate is allocated while a second PDCCH candidate is dropped (not allocated).

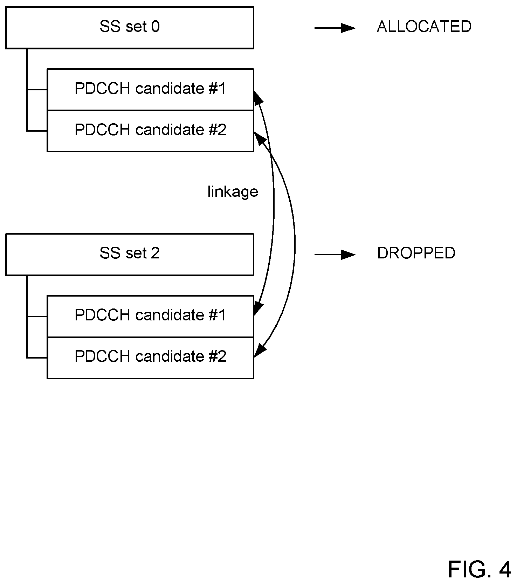

In an example in FIG. 4, PDCCH candidates #1 and #2 in an SS set having an SS set ID = 0 (SS set 0) and PDCCH candidates #1 and #2 in an SS set having an SS set ID = 2 (SS set 2) are configured. PDCCH candidate #1 in SS set 0 and PDCCH candidate #1 in SS the set 2 have linkage, while PDCCH candidate #2 in SS set 0 and PDCCH candidate #2 in SS set 2 have linkage. PDCCH candidates #1 and #2 in SS set 0 are allocated in ascending order of the SS set IDs. Subsequently, if there is no room for allocating PDCCH candidates #1 and #2 in SS set 2 (not a sufficient remaining number of PDCCH candidates to the maximum number) by comparing the count of PDCCH candidates to be allocated and the maximum number, PDCCH candidates #1 and #2 in SS set 2 are dropped (not allocated).

### {{Aspect 2-2}}

The two PDCCH candidates in the two SS sets are counted independently and allocated independently. In a procedure of allocating PDCCH candidates, priority of linked SS sets / PDCCH candidates is increased.

In the procedure of allocating PDCCH candidates, when a plurality of PDCCH candidates in one SS set are allocated, PDCCH candidates / SS sets linked later (associated with higher IDs) may be allocated using higher priority. Allocation of PDCCH candidates may follow either of allocation methods 1 and 2 below.

### {Allocation Method 1}

All the PDCCH candidates in the linked SS sets may be allocated using higher priority.

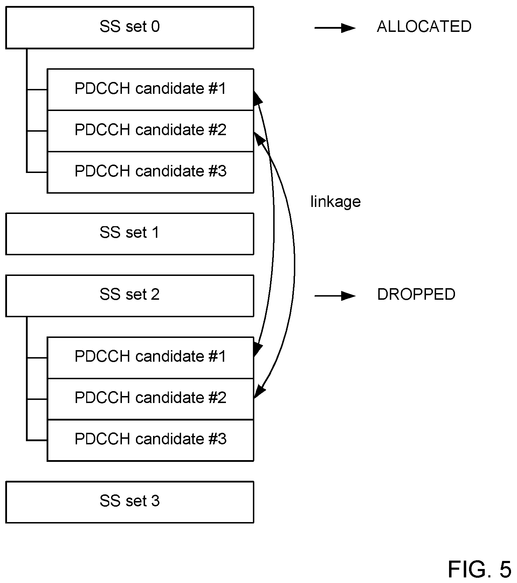

In an example in FIG. 5, SS sets 0 to 3 (SS sets having SS set IDs 0 to 3) are configured, and PDCCH candidates #1 to #3 are configured in SS set 0 while PDCCH candidates #1 to #3 are configured in SS set 2. PDCCH candidate #1 in SS set 0 and PDCCH candidate #1 in SS the set 2 have linkage, while PDCCH candidate #2 in SS set 0 and PDCCH candidate #2 in SS set 2 have linkage. For example, in accordance with an allocation method 1 (descending order of priorities and then ascending order of SS set IDs), SS set 0, SS set 2, SS set 1, and SS set 3 are allocated in this order. After the allocation of the PDCCH candidates in SS set 0, if there is no room for allocating the PDCCH candidates in SS set 2 (not a sufficient remaining number of PDCCH candidates to the maximum number) by comparing the count of PDCCH candidates to be allocated and the maximum number, the PDCCH candidates are dropped (not allocated).

### {Allocation Method 2}

(Only) PDCCH candidates having linkage may be allocated using higher priority. For example, in accordance with an allocation method 2 (PDCCH candidates having linkage and then ascending order of SS set IDs), SS set 0, PDCCH candidates #1 and #2 in SS set 2, SS set 1, and SS set 3 are allocated in this order in the example in FIG. 5. After the allocation of the PDCCH candidates in SS set 0, if there is no room for allocating the PDCCH candidates in SS set 2 (not a sufficient remaining number of PDCCH candidates to the maximum number) by comparing the count of PDCCH candidates to be allocated and the maximum number, the PDCCH candidates are dropped (not allocated).

For those having the same priority, the PDCCH candidates may be allocated in the order of SS set IDs from the lowest to the highest (ascending order) (similarly to the existing procedure).

Other respects of aspect 2-2 may be similar to those of aspect 2-1.

In this case, it may happen that a first PDCCH candidate is allocated while a second PDCCH candidate is dropped (not allocated).

### <<Aspect 2-3>>

Two SS sets having linkage are counted together and allocated together. All the PDCCH candidates in the two SS sets may be counted together and allocated together. This aspect is preferable in a case where all the PDCCH candidates in the two SS sets are configured having linkage. This aspect may be applied to a case where all or some of the PDCCH candidates are configured having linkage.

In a case of counting for an SS set having a lower ID, an SS set linked to the SS set may be counted together. If one PDCCH candidate is linked to another PDCCH candidate, the number of PDCCH candidates to be allocated may be counted as 1/2/3/4. A plurality of values among 1/2/3/4 may be supported. This support of the plurality of values may depend on at least one of a configuration and UE capability. If all the PDCCH candidates in the two SS sets can be allocated, all the PDCCH candidates in both of the two SS sets need not necessarily be allocated. If there are not sufficient PDCCH candidates (no room for PDCCH candidates, not a sufficient remaining number of PDCCH candidates to the maximum number) for all the PDCCH candidates in the two SS sets, all the PDCCH candidates in both of the two SS sets need not necessarily be allocated (may be dropped).

In a case of counting for an SS set having a higher ID, if the PDCCH candidates in the SS set are linked to the PDCCH candidates allocated before, the number of PDCCH candidates to be allocated may be counted as 0.

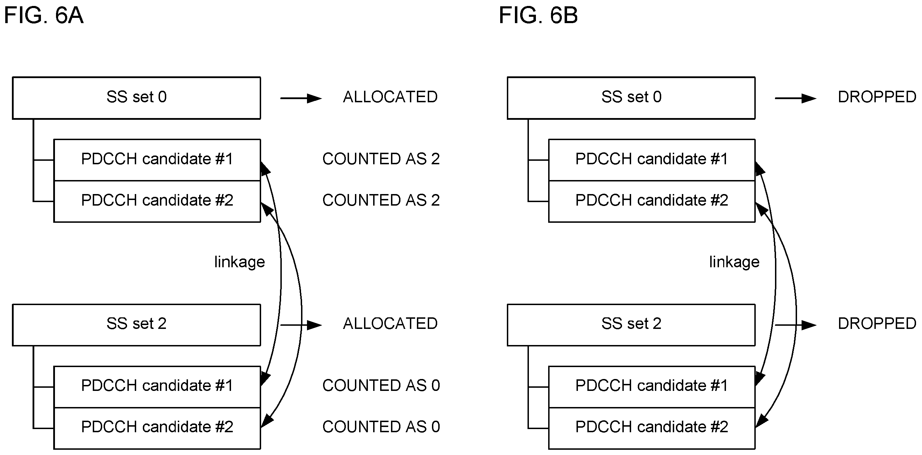

In this case, (the PDCCH candidates in) the two SS sets having linkage may all be allocated. In an example in FIG. 6A, PDCCH candidates #1 and #2 in SS set 0 and PDCCH candidates #1 and #2 in SS set 2 are configured. PDCCH candidate #1 in SS set 0 and PDCCH candidate #1 in SS the set 2 have linkage, while PDCCH candidate #2 in SS set 0 and PDCCH candidate #2 in SS set 2 have linkage. PDCCH candidate #1 in SS set 0 is counted as 2. PDCCH candidate #1 in SS set 2 linked to PDCCH candidate #1 in SS set 0 is not counted. PDCCH candidate #2 in SS set 0 is counted as 2. PDCCH candidate #2 in SS set 2 linked to PDCCH candidate #2 in SS set 0 is not counted. When the count of PDCCH candidates #1 and #2 in SS set 0 and PDCCH candidates #1 and #2 in SS set 2 is equal to or smaller than the maximum number (there is a room), all the PDCCH candidates are allocated.

In this case, (the PDCCH candidates in) the two SS sets having linkage may all be dropped. In the example in FIG. 6B, PDCCH candidate #1 in SS set 0 and PDCCH candidate #1 in SS the set 2 have linkage, while PDCCH candidate #2 in SS set 0 and PDCCH candidate #2 in SS set 2 have linkage. When the count of PDCCH candidates #1 and #2 in SS set 0 and PDCCH candidates #1 and #2 in SS set 2 exceeds the maximum number (there is no room), all the PDCCH candidates are dropped (not allocated).

### <<Aspect 2-4>>

Two PDCCH candidates having linkage are counted together and allocated together. Only the PDCCH candidates having linkage in the two SS sets may be counted together and allocated together. This aspect is preferable in a case where some (part of) the PDCCH candidates in the two SS sets are configured having linkage and the other PDCCH candidates in the two SS sets are configured without linkage.

In a case of counting for an SS set having a lower ID, if one PDCCH candidate is linked to another PDCCH candidate, the number of PDCCH candidates to be allocated may be counted as 1/2/3/4. A plurality of values among 1/2/3/4 may be supported. This support of the plurality of values may depend on at least one of a configuration and UE capability. If all the PDCCH candidates in a first SS set and the PDCCH candidates linked to the PDCCH candidates in a second SS set can be allocated, all the PDCCH candidates in the first SS set and the PDCCH candidates linked to the PDCCH candidates in the second SS set may be allocated. If there are not sufficient PDCCH candidates (no room for PDCCH candidates, not a sufficient remaining number of PDCCH candidates to the maximum number) for all the PDCCH candidates in the first SS set and the PDCCH candidates linked to the PDCCH candidates in the second SS set, all the PDCCH candidates in the first SS set and the PDCCH candidates linked to the PDCCH candidates in the second SS set need not necessarily be allocated (may be dropped).

In a case of counting for an SS set having a higher ID, if the PDCCH candidates in the SS set are linked to the PDCCH candidates allocated before, the number of PDCCH candidates to be allocated may be counted as 0.

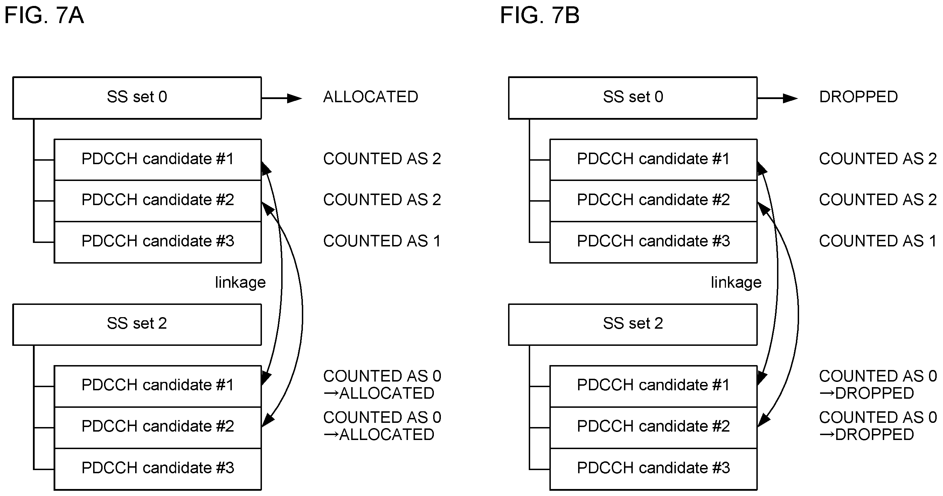

In this case, (the PDCCH candidates in) the two SS sets having linkage may all be allocated. In an example in FIG. 7A, PDCCH candidates #1 to #3 in SS set 0 and PDCCH candidates #1 to #3 in SS set 2 are configured. PDCCH candidate #1 in SS set 0 and PDCCH candidate #1 in SS the set 2 have linkage, while PDCCH candidate #2 in SS set 0 and PDCCH candidate #2 in SS set 2 have linkage. PDCCH candidate #1 in SS set 0 is allocated and has linkage, and is hence counted as 2. PDCCH candidate #1 in SS set 0 is counted as 2. PDCCH candidate #1 in SS set 2 linked to PDCCH candidate #1 in SS set 0 is not counted. PDCCH candidate #2 in SS set 0 has linkage and is hence counted as 2. PDCCH candidate #2 in SS set 2 linked to PDCCH candidate #2 in SS set 0 is not counted. PDCCH candidate #3 in SS set 0 does not have linkage and is hence counted as 1. The count of PDCCH candidate #3 in SS set 2 may follow the existing procedure. When the count of PDCCH candidates #1, #2, and #3 in SS set 0 and PDCCH candidates #1 and #2 in SS set 2 is equal to or smaller than the maximum number (there is a room), all the PDCCH candidates are allocated.

In this case, (the PDCCH candidates in) the two SS sets having linkage may all be dropped. In the example in FIG. 7B, PDCCH candidate #1 in SS set 0 and PDCCH candidate #1 in SS set 2 have linkage, while PDCCH candidate #2 in SS set 0 and PDCCH candidate #2 in SS set 2 have linkage. The count of PDCCH candidate #3 in SS set 2 may follow the existing procedure. When the count of PDCCH candidates #1, #2, and #3 in SS set 0 and PDCCH candidates #1 and #2 in SS set 2 exceeds the maximum number (there is no room), all the PDCCH candidates are dropped (not allocated).

According to this embodiment, a plurality of PDCCH candidates in the same (one) slot/span and in different (a plurality of) SS sets can be appropriately counted/allocated.

### <Third Embodiment>

In assumption 2 (case where a plurality of PDCCH candidates are in different (a plurality of) slots/spans), a procedure for counting up to the maximum number of PDCCH candidates possible for the UE to monitor for two slots/spans including SS sets / PDCCH candidates having linkage (procedure for allocating the PDCCH candidates) may follow either of aspects 3-1 and 3-2 below.

### <<Aspect 3-1>>

Two PDCCH candidates in two slots/spans are counted independently (similarly to the existing procedure).

In a case of counting for a first slot/span, if one PDCCH candidate is linked to another PDCCH candidate, the number of PDCCH candidates may be counted as 1.

In a case of counting for a subsequent (second) slot/span, if one PDCCH candidate is linked to another PDCCH candidate, the number of PDCCH candidates may be counted as 1. In this case, the number of PDCCH candidates may be counted as 2 or 3 in consideration of additional complexity of soft combining. A plurality of values among 1/2/3/ may be supported. This support of the plurality of values may depend on at least one of a configuration and UE capability.

The PDCCH candidates may be allocated in the order of SS set IDs from the lowest to the highest (ascending order) (similarly to the existing procedure).

If there are not sufficient PDCCH candidates for a certain SS set (no room for PDCCH candidates, not a sufficient remaining number of PDCCH candidates to the maximum number), all the PDCCH candidates in the SS set need not necessarily be allocated (may be dropped) (similarly to the existing procedure).

In this case, it may happen that a first PDCCH candidate is allocated while a second PDCCH candidate is dropped (not allocated).

The linkage between two SS sets / PDCCH candidates may be defined in a specification or configured.

Aspect 3-1 may be applied to options 1-2/1-3/2/3 described above.

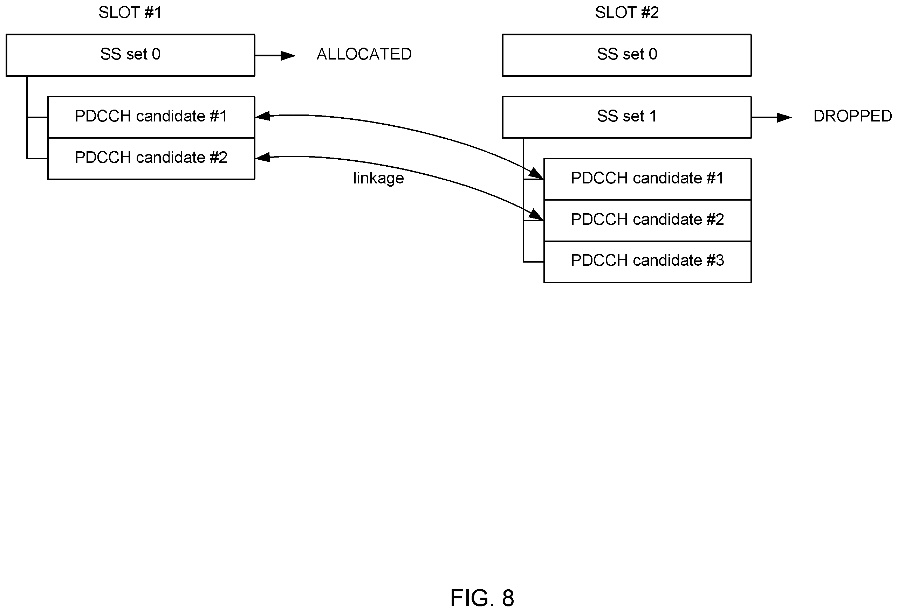

In the example in FIG. 8, SS set 0 is configured in slots #1 and #2, and SS set 1 is configured in slot #2. PDCCH candidates #1 and #2 in SS set 0 in slot #1, and PDCCH candidates #1, #2, and #3 are configured in SS set 1 in slot #2. PDCCH candidate #1 in SS set 0 in slot #1 and PDCCH candidate #1 in SS set 1 in slot #2 have linkage, while PDCCH candidate #2 in SS set 0 in slot #1 and PDCCH candidate #2 in SS set 1 in slot #2 have linkage. When the count of PDCCH candidates #1 and #2 in SS set 0 in slot #1 is equal to or smaller than the maximum number (there is a room), the PDCCH candidates are allocated. When the count of PDCCH candidates #1, #2, and #3 in SS set 1 in slot #2 exceeds the maximum number (there is no room), the PDCCH candidates are dropped (not allocated).

### <<Aspect 3-2>>

The two PDCCH candidates in the two slots/spans are counted independently and allocated independently. In a procedure of allocating PDCCH candidates, priority of linked SS sets / PDCCH candidates is increased.

In the procedure of allocating PDCCH candidates, when a PDCCH candidate in the first slot/span in one SS set is allocated, a PDCCH candidate / SS set linked to the PDCCH candidate in a later slot/span may be allocated using higher priority. Allocation of PDCCH candidates may follow either of allocation methods 1 and 2 below.

### {Allocation Method 1}

All the PDCCH candidates in the linked SS sets may be allocated using higher priority.

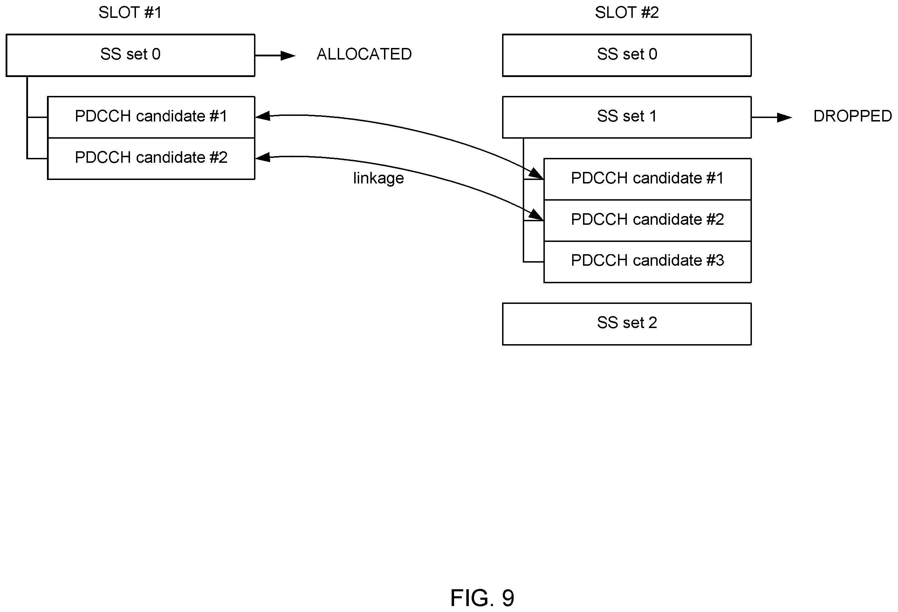

In the example in FIG. 9, SS set 0 is configured in slots #1 and #2, and SS set 1 and SS set 2 are configured in slot #2. PDCCH candidates #1, #2, and #3 are configured in SS set 0 in slot #1, and PDCCH candidates #1, #2, and #3 are configured in SS set 1 in slot #2. PDCCH candidate #1 in SS set 0 in slot #1 and PDCCH candidate #1 in SS set 1 in slot #2 have linkage, while PDCCH candidate #2 in SS set 0 in slot #1 and PDCCH candidate #2 in SS set 1 in slot #2 have linkage. For example, in accordance with an allocation method 1 (ascending order of slots/spans, then descending order of priorities, and then ascending order of SS set IDs), SS set 0 is allocated in slot #1, and SS set 1, SS set 0, and SS set 2 are allocated in slot #2 in this order. When there is no room for allocating the PDCCH candidates in SS set 1 in slot #1 (not a sufficient remaining number of PDCCH candidates to the maximum number) by comparing the count of PDCCH candidates to be allocated and the maximum number, the PDCCH candidates are dropped (not allocated).

### {Allocation Method 2}

(Only) PDCCH candidates having linkage may be allocated using higher priority. For example, in accordance with an allocation method 2 (ascending order of slots/spans, then PDCCH candidates having linkage, and then ascending order of SS set IDs), SS set 0 is allocated in slot #1, and PDCCH candidates #1 and #2 in SS set 1, SS set 0, PDCCH candidate #3 in SS set 1, and SS set 2 are allocated in this order in slot #2 in the example in FIG. 9. When there is no room for allocating the PDCCH candidates in SS set 1 in slot #1 (not a sufficient remaining number of PDCCH candidates to the maximum number) by comparing the count of PDCCH candidates to be allocated and the maximum number, the PDCCH candidates are dropped (not allocated).

For those having the same priority, the PDCCH candidates may be allocated in the order of SS set IDs from the lowest to the highest (ascending order) (similarly to the existing procedure). The PDCCH candidates may be allocated in the order (ascending order) of the linked SS set IDs in the previous slots/spans from the lowest to the highest. For example, when SS set 0 in slot #1 is linked to SS set 1 in slot #2 and SS set 1 in slot #1 is linked to SS set 0 in slot #2, the priority of SS set 1 may be higher than the priority of SS set 0 in slot #2.

In this case, it may happen that a first PDCCH candidate is allocated while a second PDCCH candidate is dropped (not allocated).

Other respects of aspect 3-2 may be similar to those of aspect 3-1.

According to this embodiment, a plurality of PDCCH candidates in different (a plurality of) slots/spans can be appropriately counted/allocated.

### <Fourth Embodiment>

UE capability corresponding to at least one function (characteristics, feature) in the first to third embodiments may be defined. When a UE reports this UE capability, the UE may perform the corresponding function. When the UE reports this UE capability and is configured with a higher layer parameter corresponding to this function, the UE may perform the corresponding function. The higher layer parameter (RRC information element) corresponding to this function may be defined. When this higher layer parameter is configured, the UE may perform the corresponding function.

The UE capability may indicate whether the UE supports this function.

The UE capability may indicate whether the UE supports PDCCH repetition.

The UE capability may indicate whether the UE supports PDCCH repetition using soft combining.

The UE capability may indicate, when the UE counts the number of PDCCH candidates to the maximum number, the number of decodings to be counted for two PDCCH repetitions using soft combining (for example, 1/2/3/4).

According to this embodiment, the UE can perform the function while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

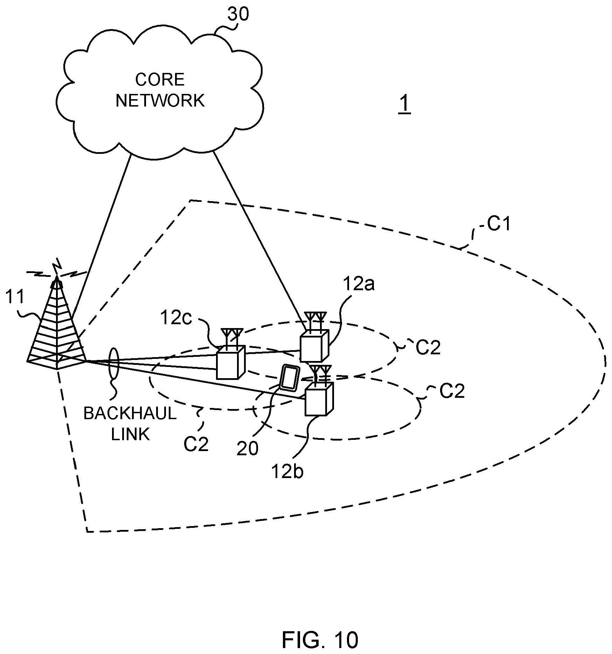

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

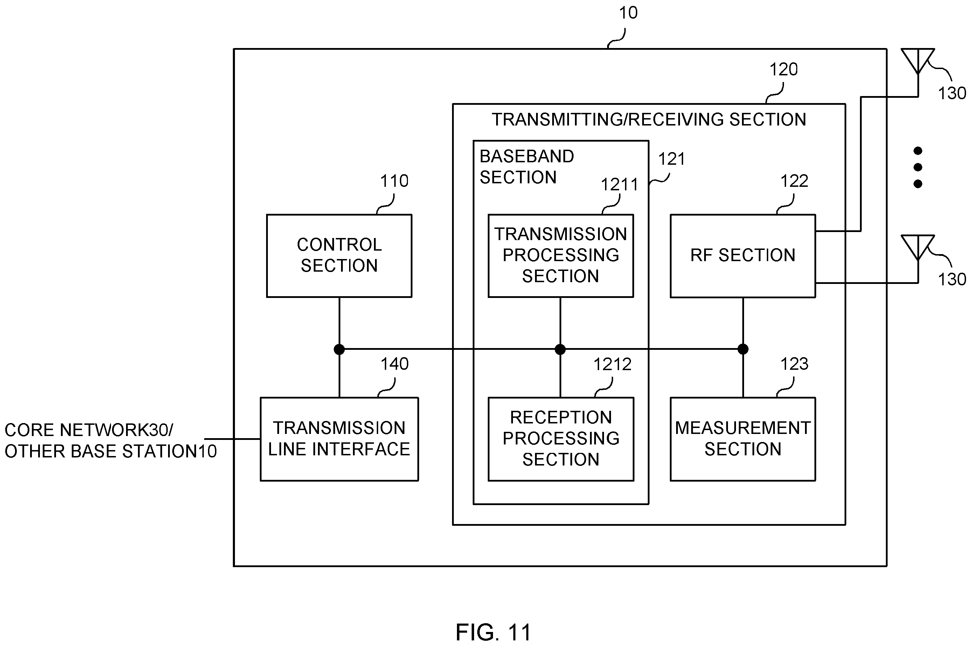

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine a plurality of physical downlink control channel (PDCCH) candidates. The transmitting/receiving section 120 may transmit a PDCCH in at least one of the plurality of PDCCH candidates. The plurality of PDCCH candidates may be associated with a plurality of respective values of a parameter indicating at least one of a control resource set, a search space set, a slot, and a span. The plurality of PDCCH candidates may be linked to each other.

### (User Terminal)

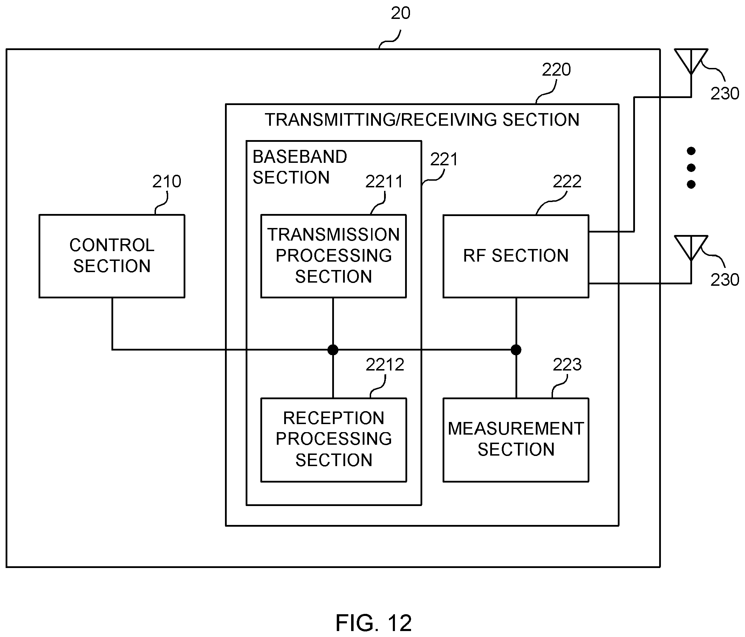

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The control section 210 may determine a plurality of physical downlink control channel (PDCCH) candidates. The transmitting/receiving section 220 may monitor the plurality of PDCCH candidates. The plurality of PDCCH candidates may be associated with a plurality of respective values of a parameter indicating at least one of a control resource set, a search space set, a slot, and a span. The plurality of PDCCH candidates may be linked to each other.

The plurality of PDCCH candidates may be in the same slot or the same span and in the same search space set (first embodiment).

The plurality of PDCCH candidates may be in the same slot or the same span and in different search space sets (second embodiment).

The plurality of PDCCH candidates may be in different slots or different spans (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

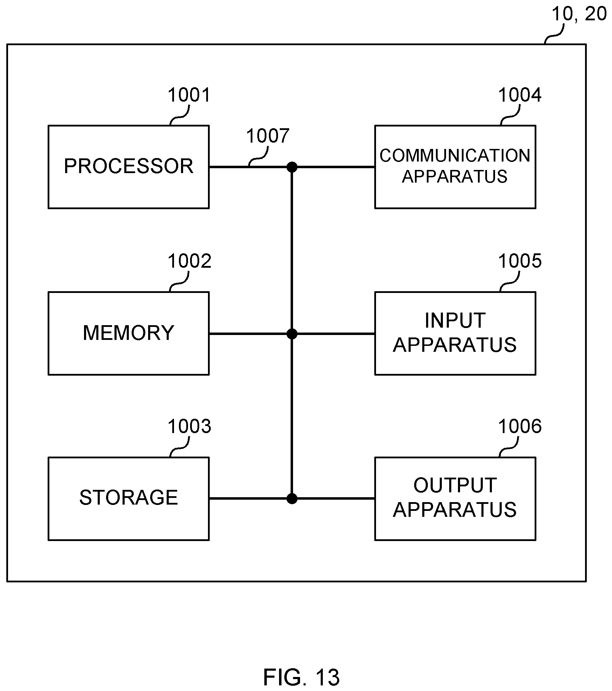

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a control section (210) that, when a first search space, SS, set and a second SS set that are linked to each other are in a same slot or in a same span, controls such that a number of physical downlink control channel, PDCCH, candidates of an SS set with a higher index out of the first SS set and the second SS set is counted as 2; and
a receiving section (222) that monitors PDCCH candidates of the first SS set and PDCCH candidates of the second SS set.

2. The terminal (20) according to claim 1, wherein when the first SS set and the second SS set are in different spans, the control section controls such that a number of PDCCH candidates of an SS set in a later span out of the first SS set and the second SS set is counted as 2.

3. A radio communication method for a terminal (20), comprising:
when a first search space, SS, set and a second SS set that are linked to each other are in a same slot or in a same span, controlling such that a number of physical downlink control channel, PDCCH, candidates of an SS set with a higher index out of the first SS set and the second SS set is counted as 2; and
monitoring PDCCH candidates of the first SS set and PDCCH candidates of the second SS set.

4. A base station (10) comprising:
a control section (110) that, when a first search space, SS, set and a second SS set that are linked to each other are in a same slot or in a same span, determines that a number of physical downlink control channel, PDCCH, candidates of an SS set with a higher index out of the first SS set and the second SS set is counted as 2 by a terminal; and
a transmitting section (120) that transmits a PDCCH in at least one of PDCCH candidates of the first SS set and PDCCH candidates of the second SS set.

5. A system (1) comprising a terminal (20) and a base station (10), wherein
the terminal (20) comprises:
a control section (210) that, when a first search space, SS, set and a second SS set that are linked to each other are in a same slot or in a same span, controls such that a number of physical downlink control channel, PDCCH, candidates of an SS set with a higher index out of the first SS set and the second SS set is counted as 2; and
a receiving section (220) that monitors PDCCH candidates of the first SS set and PDCCH candidates of the second SS set, and
the base station (10) comprises:
a transmitting section (120) that transmits a PDCCH in at least one of the PDCCH candidates of the first SS set and the PDCCH candidates of the second SS set.

## Patentansprüche

1. Endgerät (20), umfassend:
einen Steuerabschnitt (210), der, wenn ein erster Suchraum-, SS-, Satz und ein zweiter SS-Satz, die untereinander verknüpft sind, in einem gleichen Slot oder in einer gleichen Spanne liegen, so steuert, dass eine Anzahl von physischen Downlink-Steuerkanal-, PDCCH-, Kandidaten eines SS-Satzes mit einem höheren Index unter dem ersten SS-Satz und dem zweiten SS-Satz als 2 gezählt wird; und
einen Empfangsabschnitt (222), der PDCCH-Kandidaten des ersten SS-Satzes und PDCCH-Kandidaten des zweiten SS-Satzes überwacht.

2. Endgerät (20) nach Anspruch 1, wobei, wenn der erste SS-Satz und der zweite SS-Satz in unterschiedlichen Spannen liegen, der Steuerabschnitt so steuert, dass eine Anzahl von PDCCH-Kandidaten eines SS-Satzes in einer späteren Spanne unter dem ersten SS-Satz und dem zweiten SS-Satz als 2 gezählt wird.

3. Funkkommunikationsverfahren für ein Endgerät (20), umfassend:
wenn ein erster Suchraum-, SS-, Satz und ein zweiter SS-Satz, die untereinander verknüpft sind, in einem gleichen Slot oder in einer gleichen Spanne liegen, Steuern, so dass eine Anzahl von physischen Downlink-Steuerkanal-, PDCCH-, Kandidaten eines SS-Satzes mit einem höheren Index unter dem ersten SS-Satz und dem zweiten SS-Satz als 2 gezählt wird; und
Überwachen von PDCCH-Kandidaten des ersten SS-Satzes und PDCCH-Kandidaten des zweiten SS-Satzes.

4. Basisstation (10), umfassend:
einen Steuerabschnitt (110), der, wenn ein erster Suchraum-, SS-, Satz und ein zweiter SS-Satz, die untereinander verknüpft sind, in einem gleichen Slot oder in einer gleichen Spanne liegen, bestimmt, dass eine Anzahl von physischen Downlink-Steuerkanal-, PDCCH-, Kandidaten eines SS-Satzes mit einem höheren Index unter dem ersten SS-Satz und dem zweiten SS-Satz von einem Endgerät als 2 gezählt wird; und
einen Übertragungsabschnitt (120), der einen PDCCH in mindestens einem von PDCCH-Kandidaten des ersten SS-Satzes und PDCCH-Kandidaten des zweiten SS-Satzes überträgt.

5. System (1), umfassend ein Endgerät (20) und eine Basisstation (10), wobei
das Endgerät (20) Folgendes umfasst:
einen Steuerabschnitt (210), der, wenn ein erster Suchraum-, SS-, Satz und ein zweiter SS-Satz, die untereinander verknüpft sind, in einem gleichen Slot oder in einer gleichen Spanne liegen, so steuert, dass eine Anzahl von physischen Downlink-Steuerkanal-, PDCCH-, Kandidaten eines SS-Satzes mit einem höheren Index unter dem ersten SS-Satz und dem zweiten SS-Satz als 2 gezählt wird; und
einen Empfangsabschnitt (220), der PDCCH-Kandidaten des ersten SS-Satzes und PDCCH-Kandidaten des zweiten SS-Satzes überwacht, und
wobei die Basisstation (10) Folgendes umfasst:
einen Übertragungsabschnitt (120), der einen PDCCH in mindestens einem der PDCCH-Kandidaten des ersten SS-Satzes und den PDCCH-Kandidaten des zweiten SS-Satzes überträgt.

## Revendications

1. Terminal (20) comprenant :
une section de commande (210) qui, lorsqu'un premier ensemble d'espaces de recherche, SS, et un second ensemble de SS qui sont liés l'un à l'autre sont dans un même intervalle ou dans une même étendue, commande de sorte qu'un nombre de candidats de canal de commande de liaison descendante physique, PDCCH, d'un ensemble de SS avec un indice plus élevé parmi le premier ensemble de SS et le second ensemble de SS soit compté comme 2 ; et
une section de réception (222) qui surveille des candidats de PDCCH du premier ensemble de SS et des candidats de PDCCH du second ensemble de SS.

2. Terminal (20) selon la revendication 1, dans lequel, lorsque le premier ensemble de SS et le second ensemble de SS sont dans des étendues différentes, la section de commande commande de sorte qu'un nombre de candidats de PDCCH d'un ensemble de SS dans une étendue postérieure parmi le premier ensemble de SS et le second ensemble de SS soit compté comme 2.

3. Procédé de communication radio pour un terminal (20), comprenant :
lorsqu'un premier ensemble d'espaces de recherche, SS, et un second ensemble de SS qui sont liés l'un à l'autre sont dans un même intervalle ou dans une même étendue, la commande de sorte qu'un nombre de candidats de canal de commande de liaison descendante physique, PDCCH, d'un ensemble de SS avec un indice plus élevé parmi le premier ensemble de SS et le second ensemble de SS soit compté comme 2 ; et
la surveillance de candidats de PDCCH du premier ensemble de SS et de candidats de PDCCH du second ensemble de SS.

4. Station de base (10) comprenant :
une section de commande (110) qui, lorsqu'un premier ensemble d'espaces de recherche, SS, et un second ensemble de SS qui sont liés l'un à l'autre sont dans un même intervalle ou dans une même étendue, détermine qu'un nombre de candidats de canal de commande de liaison descendante physique, PDCCH, d'un ensemble de SS avec un indice plus élevé parmi le premier ensemble de SS et le second ensemble de SS est compté comme 2 par un terminal ; et
une section de transmission (120) qui transmet un PDCCH dans au moins un de candidats de PDCCH du premier ensemble de SS et de candidats de PDCCH du second ensemble de SS.

5. Système (1) comprenant un terminal (20) et une station de base (10), dans lequel
le terminal (20) comprend :
une section de commande (210) qui, lorsqu'un premier ensemble d'espaces de recherche, SS, et un second ensemble de SS qui sont liés l'un à l'autre sont dans un même intervalle ou dans une même étendue, commande de sorte qu'un nombre de candidats de canal de commande de liaison descendante physique, PDCCH, d'un ensemble de SS avec un indice plus élevé parmi le premier ensemble de SS et le second ensemble de SS soit compté comme 2 ; et
une section de réception (220) qui surveille des candidats de PDCCH du premier ensemble de SS et des candidats de PDCCH du second ensemble de SS, et
la station de base (10) comprend :
une section de transmission (120) qui transmet un PDCCH dans au moins un des candidats de PDCCH du premier ensemble de SS et des candidats de PDCCH du second ensemble de SS.
